# EUROPÄISCHE PATENTSCHRIFT

(11) **EP 1 869 348 B1**
(45) Veröffentlichungstag und Bekanntmachung des Hinweises auf die Patenterteilung: **27.01.2010**
(21) Anmeldenummer: 06725668.5
(22) Anmeldetag: 10.04.2006
(51) Int. Cl.: F16J 15/40, F16J 15/00, F01D 11/06, F04D 29/08

(54) **DICHTUNGSSYSTEM ZUR ABDICHTUNG EINES PROZESSGASRAUMES GEGEN EINEN DICHTRAUM**
SEALING SYSTEM FOR SEALING A GAS PROCESSING CHAMBER WITH RESPECT TO A SEALED CHAMBER
SYSTEME D'ETANCHEITE POUR ASSURER L'ETANCHEITE D'UN ESPACE A GAZ DE PROCEDE VIS-A-VIS D'UN ESPACE ETANCHE

(30) Priorität: 14.04.2005 EP 05008206
(43) Veröffentlichungstag der Anmeldung: 26.12.2007
(73) Patentinhaber: SIEMENS AKTIENGESELLSCHAFT, 80333 München (DE)
(72) Erfinder: MEYER, Franz-Josef, 46446 Emmerich (DE)
(86) Internationale Anmeldenummer: PCT/EP2006/061467
(87) Internationale Veröffentlichungsnummer: WO 2006/108819

(56) Entgegenhaltungen:
- EP-A- 1 207 310
- DE-B- 1 218 076
- US-A- 1 867 236
- US-A- 4 078 809
- US-A- 4 193 603
- US-B1- 6 330 790
- US-B1- 6 843 482
- PATENT ABSTRACTS OF JAPAN Bd. 009, Nr. 060 (M-364), 16. März 1985 (1985-03-16) -& JP 59 194004 A (ISHIKAWAJIMA HARIMA JUKOGYO KK), 2. November 1984 (1984-11-02)

## Beschreibung

Die Erfindung betrifft ein Sperrlabyrinth zur Beaufschlagung mit einem Gas und zur Anordnung vor einer Gasdichtung mit wenigstens einer Kammer sowie ein Gasdichtungssystem mit einer Gasdichtung und einem Sperrlabyrinth, wobei das Sperrlabyrinth vor der Gasdichtung angeordnet ist. Die Erfindung führt auf ein Gehäuse und einen Verdichter. Die Erfindung betrifft weiter ein Verfahren zur Abdichtung eines Prozessgasraumes gegen einen Dichtraum, mit einem Gasdichtungssystem aufweisend eine Gasdichtung und ein prozessgasseitig vor der Gasdichtung angeordnetes Sperrlabyrinth mit wenigstens einer Kammer.

Gasdichtungen sind berührungslose Dichtungen mit extrem kleinen Leckagen. Sie eignen sich insbesondere zur Abdichtung rotierender Teile, wie z.B. einer Welle. "Berührungslos" heißt in diesem Zusammenhang, dass die Gasdichtung bei Stillstand des ansonsten bewegten Teils (z.B. der Welle) zwar über eine Feder angedrückt sein kann - im Betrieb hebt die Gasdichtung aufgrund der Bewegung des Teils jedoch üblicherweise ab. Zunehmend werden solche Gasdichtungen zur Abdichtung von Turboverdichtern eingesetzt. Im Falle eines Verdichters kann eine Gasdichtung z.B. zur Abdichtung einer rotierenden Welle eingesetzt werden. Bei Betrieb der Welle, z.B. bei einer Umdrehungszahl oberhalb von 3000 Umdrehungen/min, hebt die Gasdichtung von der Welle ab und bildet einen Spalt zur Welle, der üblicherweise im Mikrometerbereich liegt.

Ganz allgemein dient eine Gasdichtung zur Abdichtung eines Prozessgasraumes gegen einen Dichtraum und könnte im Prinzip unmittelbar angrenzend an den Prozessgasraum angeordnet werden - nämlich für den unproblematischen Fall, dass ein Prozessgas direkt in Berührung mit der Gasdichtung stehen kann.

Es gibt allerdings Prozessgase, die nicht an die Gasdichtung gelangen dürfen, da sie diese, z.B. über Korrosion, Polymerisation o.ä. chemische, mechanische oder andere nachteilige Prozesse, beschädigen würden. Während unter Prozessgas im Prinzip ein beliebiges Prozessgas verstanden werden kann, tritt das erläuterte Problem insbesondere bei chemisch hochreaktiven Prozessgasen, wie z.B. Chlorgas, auf. Solche und andere für Gasdichtungen eventuell schädliche Gase können insbesondere bei Verdichtern, z.B. im Kraftwerksbereich oder im Offshore-Öl- oder -Erdgas-Bereich auftreten.

Bei solchen problematischen Fällen wird beim Einsatz von Gasdichtungen prozessgasseitig vor der Gasdichtung ein Sperrlabyrinth mit einem Gas gesperrt, so dass Prozessgas von der Gasdichtung ferngehalten wird. Für den Fall, dass externes Sperrgas verwendet wird, gelangt externes Sperrgas über das Sperrlabyrinth in das Prozessgas, was nachteilig ist. Zum Teil ist im Stand der Technik gereinigtes Prozessgas, also Reingas, als Sperrgas vorgesehen. Diese Maßnahme dient allerdings insbesondere der Schmutzabweisung betreffend die Gasdichtung und ist aufwändig.

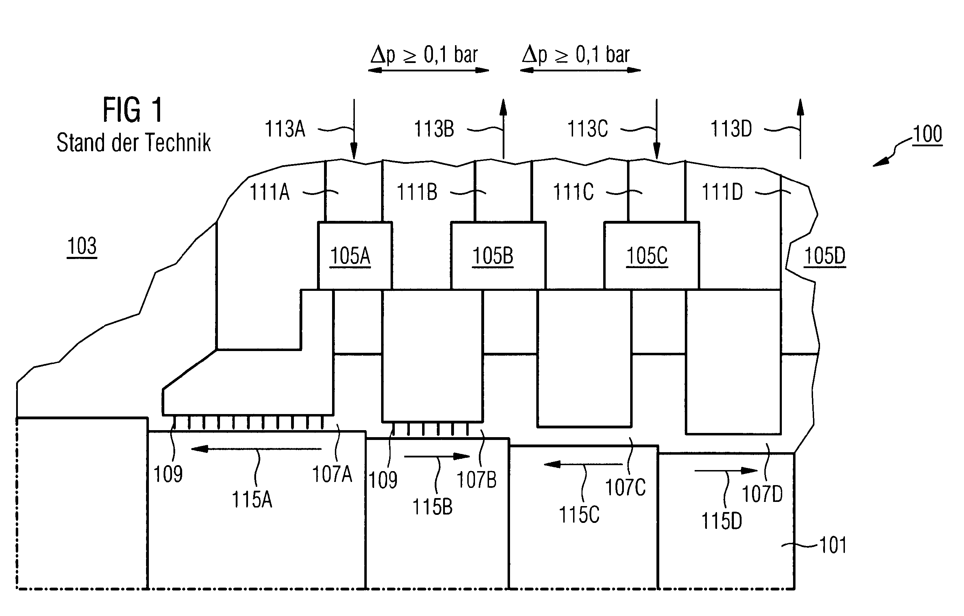

Wenn kein externes Sperrgas in das Prozessgas gelangen sollte, was z.B. häufig bei Chlorverdichtern der Fall ist, wird im Stand der Technik ein sogenanntes Mehrkammer-Sperrlabyrinth mit Differenzdruckregelung eingesetzt. Im Einzelnen ist ein solches Mehrkammer-Sperrlabyrinth in Bezug auf FIG 1 der Detailbeschreibung beschrieben. Nachteilig dabei ist, dass schon bei einer Abdichtung unter atmosphärischem Druck relativ große Mengen Sperrgas benötigt werden und ebenfalls große Mengen Prozessgas verloren gehen. Aufgrund der Differenzdruckregelung steigt bei höheren Abdichtdrücken und je nach Entsorgungsdruck, der zum Teil bei 2 bar, 3 bar oder darüber liegen kann, entweder der Prozessgasverlust oder der Sperrgasbedarf noch erheblich an.

Bekannte Sperrlabyrinthe haben also aufgrund der üblichen Differenzdruckregelung selbst bei eher niedrigen Abdichtdrücken und/oder Entsorgungsdrücken relativ hohe Leckagen.

EP1207310 A1 offenbart eine Dichtungsanordnung zur Abdichtung eines Spaltes zwischen einem Rotor und einem Gehäuse, in welchem sich Prozessgas befindet,
mit einer Gasdichtung und einem Sperrlabyrinth zur Beaufschlagung mit einem Gas, welches Sperrlabyrinth eine Kammer aufweist, wobei
ein Einlass für das beaufschlagende Gas in die eine Kammer ein Mengenstellglied aufweist, das für einen Betrieb bei konstantem Vordruck und zur Beaufschlagung der Kammer mit einer Gasströmung bei einer vorbestimmten Durchsatzmenge ausgelegt ist.

Wünschenswert wäre es vergleichsweise geringe Gasleckagen zu erhalten und Prozessgas von einer Gasdichtung fernzuhalten.

An dieser Stelle setzt die Erfindung an, deren Aufgabe es ist, eine Vorrichtung und ein Verfahren anzugeben, dass zur Abdichtung eines Prozessgasraumes gegen einen Dichtraum eingesetzt wird und bei der Prozessgas von einer Gasdichtung ferngehalten werden kann, wobei Gasleckagen möglichst gering gehalten sind.

Die Aufgabe wird hinsichtlich der Vorrichtung durch die Erfindung mit einem Sperrlabyrinth der eingangs genannten Art gelöst, bei dem erfindungsgemäß der Einlass ein Mengenstellglied aufweist, das für einen Betrieb bei konstantem Vordruck und zur Beaufschlagung einer Kammer mit einer Gasströmung bei einer vorbestimmten Durchsatzmenge ausgelegt ist.

Die Erfindung geht dabei von der Überlegung aus, dass ein Sperrlabyrinth vorteilhaft so ausgelegt sein kann, dass möglichst geringe Drücke auftreten. In diesem Zusammenhang hat die Erfindung erkannt, dass sich dafür am besten ein Mengenstellglied eignet, das für einen Betrieb bei konstantem Vordruck zur Beaufschlagung einer Kammer mit einer Gasströmung bei einer vorbestimmten, d.h. vorgegebenen Durchsatzmenge ausgelegt ist. Mit andren Worten: Ein Sperrgas wird mit konstantem Vordruck in einer solchen Menge in die Kammer eingespeist, dass im Sperrlabyrinth eine vorbestimmte Strömungsgeschwindigkeit auftritt, die zur sicheren Sperrung der Gasdichtung durch das Sperrlabyrinth gegen Prozessgas ausreicht. Dabei hat sich überraschenderweise gezeigt, dass im Sperrlabyrinth ein extrem kleiner Differenzdruck zu der Kammer realisiert werden kann, was im Vergleich zu üblichen Sperrlabyrinthen auf eine vergleichsweise kleine Gasleckage führt.

Hinsichtlich der Vorrichtung wird die Aufgabe durch die Erfindung auch durch ein Gasdichtungssystem mit einer Gasdichtung und einem Sperrlabyrinth gelöst, wobei das Sperrlabyrinth vor der Gasdichtung angeordnet ist und wobei erfindungsgemäß eine Einlasskammer des Sperrlabyrinths unmittelbar an die Gasdichtung angrenzend angeordnet ist und die Gasdichtung und das Sperrlabyrinth derart ausgelegt sind, dass die Gasdichtung eine im Vergleich zum Sperrlabyrinth vernachlässigbar kleine Gasleckage aufweist.

Mit anderen Worten: Das Sperrlabyrinth ist derart angrenzend an die Gasdichtung angeordnet, dass ein Sperrgasstrom zum Schutz der Gasdichtung lediglich von der Gasdichtung wegführt. Insbesondere ist dabei vermieden, dass ein Sperrgasstrom vom Sperrlabyrinth in einen nicht zum Sperrlabyrinth gehörenden Raum zwischen Gasdichtung und Sperrlabyrinth führt. Zusätzlich weist die Gasdichtung eine um ein Vielfaches kleinere Gasleckage als das Sperrlabyrinth auf. Diese beiden Maßnahmen führen nämlich dazu, dass ein zur Gasdichtung hin gerichtete Gasleckage eines Sperrlabyrinths praktisch vernachlässigbar ist. Auf dieser Basis lässt sich durch ein vergleichsweise einfach ausgelegtes Mengenstellglied, z.B. am Einlass einer Kammer, eine vorbestimmte Durchsatzmenge für ein Sperrgas einstellen. Da praktisch keine relevanten Gasleckagen zur Gasdichtung hin auftreten, kann ein solches Sperrlabyrinth mit extrem kleinen Differenzdrücken realisiert werden, so dass insgesamt eine Gasleckage des Sperrlabyrinths um ein Vielfaches geringer ist als die bei üblichen Sperrlabyrinthen.

Bevorzugte Weiterbildungen der Erfindung sind den Unteransprüchen zu entnehmen und geben im Einzelnen vorteilhafte Möglichkeiten an, das allgemeine Konzept der Erfindung zu realisieren.

Insbesondere ist hinsichtlich des Sperrlabyrinths eine Kammer differenzdruckreglerfrei ausgeführt. Wie von der Erfindung erkannt, kann bei der Verwendung von Differenzdruckreglern nicht ausgeschlossen werden, dass übermäßig hohe Differenzdrücke zu einer Kammer des Sperrlabyrinths auftreten, was ansteigende Gasleckagen zur Folge hat. Dies wird gemäß dem Konzept der Erfindung durch die alternative Verwendung eines Mengenstellglieds vermieden.

Insbesondere ist eine gasdichtungsseitige Kammer des Sperrlabyrinths bis auf einen oder mehrere Gasdurchlässe zu einem Raum oder einer weiteren Kammer des Sperrlabyrinths auslassfrei. Insbesondere ist eine gasdichtungsseitige Kammer zur Gasdichtung hin auslassfrei. Unter einem Gasdurchlass ist im Sinne der vorliegenden Anmeldung insbesondere ein Spalt oder ein sonstiger Durchlass direkt an dem bewegten Teil, z.B. der Welle, zu verstehen - also ein lediglich für eine Gasleckage ausreichender Durchlass oder Spalt, der durch ein eingangs erläutertes Abheben des Gasdichtungssystems entsteht. Im Unterschied dazu ist unter einem Einlass oder einem Auslass für eine Kammer eine gemäß dem Konzept vorgesehene Bespeisungs- oder Entsorgungsöffnung für ein Gas zu verstehen. Der weitere Raum kann beispielsweise ein Prozessgasraum oder ein anderer Raum sein, der weiter als die gasdichtungsseitige Kammer von der Gasdichtung entfernt ist. Vorteilhaft ist, ein Sperrlabyrinth mit anderen Worten so ausgelegt, dass die gasdichtungsseitige Kammer immer eine Bespeisungskammer ist, so dass ein unmittelbar der Gasdichtung benachbarter Gasstrom von der Gasdichtung wegweist.

Vorliegend kann unter einem Gasstrom vor allem ein Sperrgasstrom verstanden werden, beispielsweise ein Gasstrom unter Verwendung von Atmosphärengas oder Stickstoff. Ein solcher Gasstrom kann durch ein sogenanntes Vent oder eine Belüftung zu- oder abgeführt werden. Unter Umständen eignet sich als Gasstrom auch ein Prozessgasstrom, soweit dieser nicht mit der Gasdichtung unmittelbar in Berührung kommt. Insbesondere kann es sich dabei um gereinigtes Prozessgas, also Reingas, handeln. Ein in einem Sperrlabyrinth verwendeter Prozessgasstrom macht insbesondere Sinn im Rahmen eines Mehrkammer-Sperrlabyrinths, das im Einzelnen nachfolgend erläutert ist.

Ein Prozessgasstrom ist vorteilhaft über eine Entsorgung, z.B. eine Fackel, ein Wasserbad, einen Filter oder eine sonstige Reinigungsanlage aus einer Kammer des Sperrlabyrinths zu entsorgen.

Die oben genannten bevorzugten Weiterbildungen lassen sich insbesondere so ausführen, dass ein Differenzdruck zwischen einer Kammer und einem weiteren Raum und/oder zwischen zwei kommunizierenden Kammern eines Mehrkammer-Sperrlabyrinths unterhalb von 100 mbar, insbesondere unterhalb von 50 mbar, liegt.

Dies kann besonders vorteilhaft dadurch erreicht werden, dass gemäß einer Weiterbildung des Gasdichtungssystems die Gasleckage der Gasdichtung um wenigstens eine Zehnerpotenz niedriger als die Gasleckage des Sperrlabyrinths eingestellt ist.

Die vorbestimmte Durchsatzmenge - und damit die vorbestimmte Strömungsgeschwindigkeit und vorteilhaft auch der genannte, gemäß dem Konzept besonders kleine Differenzdruck - lässt sich besonders vorteilhaft über ein Mengenstellglied in Form einer Blende einstellen. Besonders zu bevorzugen ist ein Mengenstellglied, das regelbar ist. Auf diese Weise kann das Mengenstellglied auf die Dimensionierung eines Sperrlabyrinths und/oder eines Gasdichtungssystems nicht nur eingestellt werden, sondern je nach Betriebsfall, z.B. bei transienten Betriebsverläufen, nachgeregelt werden.

Ein Mehrkammer-Sperrlabyrinth eignet sich nicht nur zum Fernhalten von Prozessgas von einer Gasdichtung sondern darüber hinaus auch zum Fernhalten von Sperrgas vom Prozessgasraum.

Hinsichtlich eines Mehrkammer-Sperrlabyrinths hat es sich im Rahmen einer Weiterbildung als besonders vorteilhaft erwiesen, dass das Sperrlabyrinth wenigstens zwei kommunizierende Kammern aufweist, wobei eine erste der wenigstens zwei Kammern einen Einlass und eine zweite der wenigstens zwei Kammern einen Auslass aufweist und die wenigstens zwei kommunizierenden Kammern über wenigstens einen Gasdurchlass verbunden sind. Im Rahmen der Weiterbildung des vorgeschlagenen Konzepts ist vorteilhaft vorgesehen, dass der Einlass und/oder der Auslass ein Mengenstellglied aufweist, das für einen Betrieb bei konstantem Vordruck und zur Beaufschlagung einer Kammer mit einer Gasströmung bei einer vorbestimmten Durchsatzmenge ausgelegt ist. Ein Mengenstellglied kann also je nach Bedarf bei einer oder mehreren Kammern je nach Bedarf am Einlass und/oder am Auslass angeordnet sein.

In einer besonders bevorzugten Weiterbildung der Erfindung ist das Sperrlabyrinth durch genau drei kommunizierende Kammern gebildet, wobei eine erste und dritte der drei Kammern einen Einlass und eine zweite der drei Kammern einen Auslass aufweist und die drei kommunizierenden Kammern über wenigstens einen Gasdurchlass verbunden sind. Ein solches Dreikammer-Sperrlabyrinth ist vorteilhaft dafür ausgelegt, mit Gasströmen unterschiedlicher Art beaufschlagt zu werden.

Gemäß einer bevorzugten Auslegung dieser Weiterbildung ist die zweite Kammer zwischen der ersten und der dritten Kammer angeordnet und ein erster Gasdurchlass ist zwischen der ersten und zweiten Kammer gebildet und ein zweiter Gasdurchlass ist zwischen der dritten und zweiten Kammer gebildet. Gemäß der bevorzugten Auslegung ist der erste und der zweite Gasdurchlass für gegenläufige Gasströmungen ausgelegt. Diese bevorzugte Auslegung eignet sich insbesondere zur Beaufschlagung der ersten Kammer mit einem Sperrgas und zur Beaufschlagung der dritten Kammer mit einem Prozessgas. Auf diese Weise wird nämlich durch die Beaufschlagung der ersten Kammer mit Sperrgas (z.B. Stickstoff) Prozessgas von der Gasdichtung ferngehalten. Zum anderen wird durch die Beaufschlagung der dritten Kammer mit Prozessgas verhindert, dass Sperrgas in den Prozessgasraum gelangt. Vielmehr wird sowohl das Sperrgas als auch das Prozessgas über die mittlere, zweite Kammer abgeführt. Das auf diese Weise in der zweiten Kammer gebildete Sperrgas-Prozessgasgemisch kann beispielsweise über ein Mengenstellglied in Form einer Blende am Auslass der zweiten Kammer mengengeregelt werden, so dass im Sperrlabyrinth eine zur Sperrung ausreichende vorbestimmte Strömungsgeschwindigkeit gebildet ist. Eine solche Strömungsgeschwindigkeit ist insbesondere in einem Gasdurchlass zwischen den Kammern eingestellt. Dabei ist es gemäß dem Konzept möglich, dass Differenzdrücke zwischen der ersten und zweiten Kammer beziehungsweise zwischen der dritten und der zweiten Kammer lediglich im Bereich zwischen 10 mbar und 50 mbar liegen.

Die Erfindung führt hinsichtlich der Vorrichtung auch auf ein Gehäuse mit einem Dichtungssystem der oben erläuterten Art, wobei gemäß dem Konzept das Dichtungssystem zwischen einem Prozessgasraum und einem Dichtraum angeordnet ist. Vorteilhaft ist das Gehäuse um eine Welle herum angeordnet, wobei das Dichtungssystem ringförmig ausgebildet ist. Insbesondere erweist sich ein mit einem solchen Gehäuse versehener Verdichter vorteilhaft gegenüber üblichen Verdichtern.

Betreffend das Verfahren wird die Aufgabe durch die Erfindung mit einem Verfahren der eingangs genannten Art gelöst, bei dem erfindungsgemäß
- eine unmittelbar an die Gasdichtung angrenzend angeordnete Einlasskammer des Sperrlabyrinths mit Gas beaufschlagt wird;
- eine Gasleckage der Gasdichtung im Vergleich zu einer Gasleckage des Sperrlabyrinths vernachlässigbar klein gehalten wird; und
- eine Kammer mit einem konstanten Vordruck und mit einer Gasströmung bei einer vorbestimmten Durchsatzmenge beaufschlagt wird, wobei die Gasströmung, insbesondere am Einlass, mengengeregelt wird.

Die im Zusammenhang mit der Vorrichtung erläuterten Vorteile werden durch das Verfahren gemäß dem neuen Konzept verwirklicht.

Insbesondere wird durch die unmittelbar an die Gasdichtung angrenzende Anordnung der Einlasskammer des Sperrlabyrinths und der vernachlässigbar klein gehaltenen Gasleckage der Gasdichtung ein Gasverlust durch die Gasdichtung selbst, bzw. zur Gasdichtung hin, im Vergleich zu üblichen Verfahren praktisch vernachlässigbar. Auf diese Weise ist es im Rahmen des Verfahrens gemäß dem neuen Konzept möglich, eine Kammer mit einem konstanten Vordruck und mit einer Gasströmung bei einer vorbestimmten Durchsatzmenge zu beaufschlagen, wobei die Gasströmung am Einlass mengengeregelt wird. Ganz besonders vorteilhaft dabei ist, dass im Rahmen des neuen Konzepts auf eine Differenzdruckregelung verzichtet werden kann.

Ausführungsbeispiele werden nachfolgend anhand der Zeichnung im Vergleich zum Stand der Technik, welcher ebenfalls dargestellt ist, beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verweisen. Im Einzelnen zeigt die Zeichnung in:
- FIG 1: ein Mehrkammer-Sperrlabyrinth mit Differenzdruckregelung gemäß dem Stand der Technik, bei dem zudem eine Gasleckage zur Gasdichtung hin vorgesehen ist, was zu vergleichsweise hohen Differenzdrücken zwischen den Kammern und entsprechend hohen Gasleckagen führt;
- FIG 2: eine besonders bevorzugte Ausführungsform eines Dichtungssystems gemäß dem neuen Konzept mit einem Dreikammer-Sperrlabyrinth und einer Doppelgasdichtung;
- FIG 3: eine weitere besonders bevorzugte Ausführungsform eines Dichtungssystems gemäß dem neuen Konzept mit einem Dreikammer-Sperrlabyrinth und einer Tandemgasdichtung ohne internem Labyrinth;
- FIG 4: noch eine weitere besonders bevorzugte Ausführungsform eines Dichtungssystems gemäß dem neuen Konzept mit einem Dreikammersperrlabyrinth und einer Tandemgasdichtung mit internem Labyrinth.

FIG 1 zeigt ein Sperrlabyrinth 100 gemäß dem Stand der Technik, das Teil eines nicht näher dargestellten Dichtungssystems in einem Gehäuse eines Verdichters ist. Das Dichtungssystem ist ebenso wie das Sperrlabyrinth 100 ringförmig um eine Welle 101 angeordnet und dichtet dabei einen Prozessgasraum 103 gegenüber einem nicht näher dargestellten Dichtraum ab. Das Sperrlabyrinth 100 ist vorliegend mit vier Kammern 105A, 105B, 105C, 105D gebildet. Die Kammern 105A, 105B, 105C, 105D sind als kommunizierende Kammern jeweils mit einem Gasdurchlass 107A, 107B, 107C, 107D verbunden. Ein Gasdurchlass 107A, 107B, 107C, 107D ist in FIG 1 übertrieben schematisch dargestellt. In der Realität ist ein Gasdurchlass 107A, 107B, 107C, 107D in Form eines möglichst geringfügigen Spaltes zwischen Sperrlabyrinth 100 und Welle 101 gebildet. Um eine Gasleckage durch einen Gasdurchlass noch weiter abzusenken ist vorliegend der Gasdurchlass 107A und 107B zusätzlich mit Dichtlamellen 109 versehen. Im Unterschied zu den lediglich für eine Gasleckage ausgelegten Gasdurchlässen 107A, 107B, 107C, 107D weist das Mehrkammersperrlabyrinth vier nicht näher dargestellte Öffnungen 111A, 111B, 111C, 111D auf. Diese sind im Falle der Kammer 105A und 105C in Form eines Einlasses für eine Gasströmung 113A, 113C gebildet. Die Gasströmung 113A ist in Form eines Prozessgasstroms gebildet. Die Gasströmung 113C ist in Form eines Sperrgasstromes gebildet. Die Kammern 105B, 105D sind mit einem nicht näher dargestellten Auslass 111B, 111D versehen, der jeweils für den Austritt eines Gasstroms 113B, 113D vorgesehen ist. Der Gasstrom 113B ist in Form eines Prozessgas-Sperrgas-Gemisches gebildet, welches über den Auslass 111B einer Entsorgung, beispielsweise einer Fackel, einem Wasserbad, einer Filtereinrichtung oder einer sonstigen Reinigungseinrichtung, der externen Umgebung zugeführt wird. Der Gasstrom 113B ist in Form eines in der Regel nicht weiter zu reinigenden Sperrgasstroms, z.B. als ein Stickoxidstrom, gebildet, und kann über eine übliche Belüftung ("Vent") abgeführt werden. Das Mehrkammersperrlabyrinth 100 gemäß dem Stand der Technik sorgt nicht nur dafür, dass Prozessgas weitestgehend von einer weiter rechts anzuordnenden und nicht weiter dargestellten Gasdichtung ferngehalten wird, sondern darüber hinaus auch dafür, dass kein externes Sperrgas des Sperrgasstroms 113C in das Prozessgas im Prozessgasraum 103 gelangt.

Ein solches Mehrkammersperrlabyrinth eignet sich häufig bei Chlorverdichtern. Es wird Sperrgas über einen Gasstrom 113C einer Kammer 105C zugeleitet und über Gasdurchlässe 107C, 107D in Form eines entsprechenden Sperrgasleckagestroms 115C, 115D den daneben liegenden kommunizierenden Kammern 105B und 105D zugeführt. Der Sperrgasleckagestrom 115D von der Kammer 105C zur Kammer 105D sorgt im Wesentlichen dafür, dass eine nicht näher dargestellte Gasdichtung lediglich mit unbedenklichem Sperrgas, beispielsweise Stickstoff, in Kontakt kommt. Der Sperrgasleckagestrom 115C in dem Gasdurchlass 107C zur Kammer 105B ist gegenläufig zu einem Prozessgasleckagestrom 115B von der Kammer 105A zur Kammer 105B. Auf diese Weise ist die Kammer 105C und 105D weitestgehend für Prozessgas des Gasstroms 113A und 113B gesperrt. Vielmehr wird das über den Gasstrom 113A der Kammer 105A zugeführte Prozessgas zusammen mit dem unbedenklichen Sperrgas des Gasstroms 113C und des Sperrgasleckagestrom 107C durch die Kammer 105B und den entsprechenden Auslass 111B in Form eines Gasstroms 113B mit einem Sperrgas-Prozessgas-Gemisch einer nicht näher dargestellten Entsorgung zugeführt. Der weitere durch den Gasstrom 113A in Form eines Prozessgasstromes bewirkte Prozessgasleckagestrom 115A im Gasdurchlass 115A zwischen der Kammer 105A und dem Prozessgasraum 103 sorgt dafür, dass das Mehrkammersperrlabyrinth 100 weitestgehend gegen Prozessgas aus dem Prozessgasraum 103 gesperrt wird.

Da vorliegend Prozessgas im Gasstrom 113A verwendet wird, ist weitestgehend dafür gesorgt, dass dem Prozessgasraum 103 über den Prozessgasleckagedurchlass 107A lediglich Prozessgas in Form des Prozessgasleckagestroms 115A zugeführt wird. Eine Vermischung von Prozessgas und Sperrgas im Prozessgasraum 103 ist im Übrigen durch den Prozessgasleckagestrom 115B entgegengewirkt, da dieser dem Sperrgasleckagestrom 115C entgegengerichtet ist.

Die Größe der Leckageströme 115A, 115B, 115C, 115D in den Gasdurchlässen 107A, 107B, 107C, 107D ist beim Stand der Technik durch eine nicht näher dargestellte Differenzdruckregelungen beim Mehrkammersperrlabyrinth 100 festgelegt. Dies hat den Nachteil, dass schon bei atmosphärischer Abdichtung eine relativ große Mengen Sperrgas über einen entsprechenden Gasstrom 113C zugeführt werden muss. Des Weiteren muss eine relativ große Menge an Prozessgas über einen Gasstrom 113A zugeführt werden, um eine entsprechende Sperrwirkung in den Leckageströmen 115A, 115B, zu erreichen.

Es wurde im Rahmen des vorliegenden neuen Konzepts erkannt, dass das wesentliche Problem in der Verwendung von Differenzdruckregelungen begründet liegt, die erst bei relativ hohen Differenzdrücken jenseits von 0,1 bar effizient funktionieren. Entsprechende Differenzdrücke Δp zwischen einer ersten Kammer 111A und einer zweiten Kammer 111B bzw. zwischen einer dritten Kammer 111C und einer zweiten Kammer 111B sind in FIG 1 eingezeichnet. Deshalb gehen relativ große Mengen an Prozessgas und Sperrgas über den Gasstrom 113B durch die Kammer 105B und deren Auslass 111B verloren. Darüber hinaus geht zusätzlich eine relativ große Menge an Sperrgas über den Gasstrom 113D durch die Kammer 105D und deren Auslass 111D verloren. Gemäß dem Stand der Technik ist es zum Teil notwendig, dass eine große Menge von Sperrgasleckagestrom 115D durch den Gasdurchlass 107D von der Kammer 105C zur Kammer 105D verloren geht. Höhere Abdichtdrücke können insbesondere entstehen, wenn eine Entsorgungsvorrichtung bei höheren Drücken arbeitet - eine Fackel hat üblicherweise einen Überdruck von bis zu 3 bar gegenüber dem Druckniveau in den Kammern 105A, 105B, 105C, 105D. Im Falle höherer Abdichtdrücke steigt der Prozessgasverlust (Prozessgasleckagestrom 115B) und/oder der Sperrgasbedarf (Gasstrom 113C) aufgrund des relativ hohen Sperrgasverlustes (Sperrgasleckagestrom 115C, 115D).

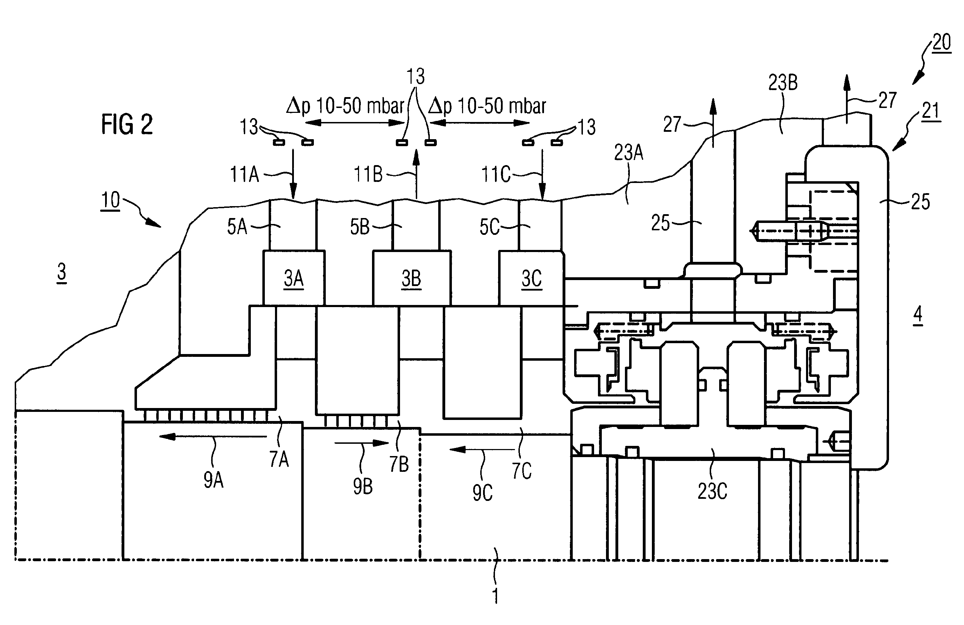

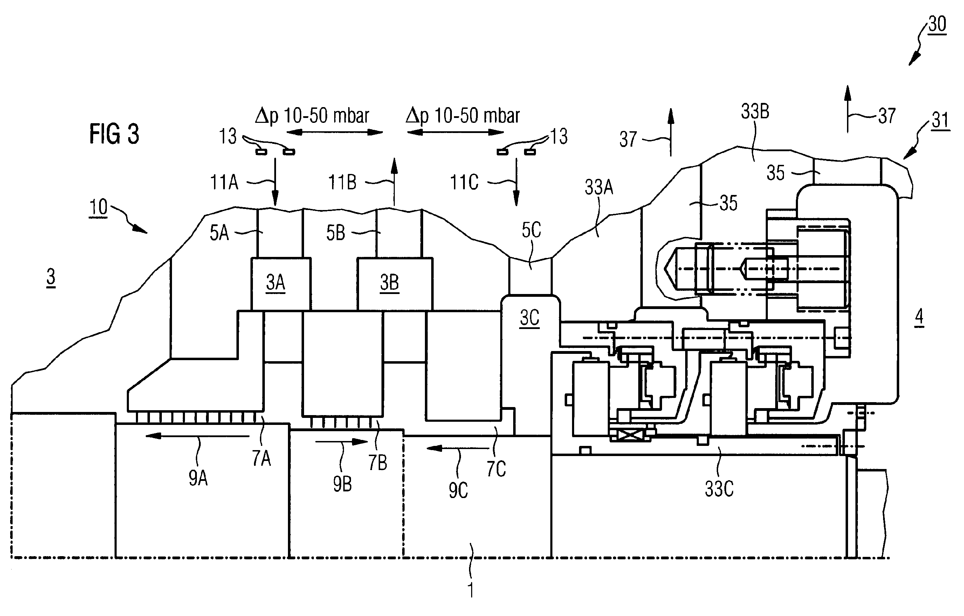

Derartige Probleme sind bei den besonders bevorzugten Ausführungsformen eines Dichtungssystems 20, 30, 40 gemäß FIG 2, FIG 3 und FIG 4 durch die Verwendung einer besonders bevorzugten Ausführungsform eines Sperrlabyrinths 10 vermieden. Ein Dichtungssystem 20, 30, 40 wird mit einer Doppelgasdichtung 21 im Falle der FIG 2, oder mit einer Tandemgasdichtung 31 mit internem Labyrinth im Falle der FIG 3 oder mit einer Tandemgasdichtung 41 ohne internem Labyrinth gebildet. Im Übrigen sind in FIG 2, FIG3 und FIG 4 die Welle 1 eines Verdichters und auch übrige Merkmale mit im Wesentlichen gleicher Funktion oder Ausbildung mit gleichen Bezugszeichen versehen.

In FIG 2, FIG 3 und FIG 4 ist das Sperrlabyrinth 10 in Form eines Dreikammersperrlabyrinths aus genau drei kommunizierenden Kammern 3A, 3B, 3C gebildet. Die erste Kammer 3A und die dritte Kammer 3C weisen einen Einlass 5A und 5C auf. Die zweite Kammer 3B der drei kommunizierenden Kammern weist einen Auslass 5B auf. Außerdem sind die drei kommunizierenden Kammern 3A, 3B, 3C über einen Gasdurchlass 7A, 7B, 7C verbunden. Dabei ist der erste Gasdurchlass 7A und der zweite Gasdurchlass 7B für gegenläufige Gasleckageströmungen 9A, 9B ausgelegt. Des Weiteren ist der Gasdurchlass 7C und 7B für gegenläufige Gasleckageströmungen 9C und 9B ausgelegt. Die dritte Kammer 3C ist zur Beaufschlagung mit einem Sperrgas in Form eines Sperrgasstroms 11C ausgelegt. Die erste Kammer 3A ist zur Beaufschlagung mit einem Prozessgas in Form eines Prozessgasstroms 11A ausgelegt.

Die dritte Kammer 3C weist an ihrem nicht näher dargestellten Eingang 5C ein nicht näher dargestelltes Mengenstellglied 13 in Form einer Blende auf. Dies ist für einen Betrieb bei konstantem Vordruck für das Sperrgas des Sperrgasstroms 11C zur Beaufschlagung der dritten Kammer 5C bei einer vorbestimmten Durchsatzmenge ausgelegt.

Bei der dritten Kammer 3C handelt es sich also um eine Einlasskammer. Diese gasdichtungsseitige Einlasskammer ist im Übrigen auslassfrei und weist einen Gasdurchlass 7C lediglich zu der weiteren kommunizierenden Kammer 3B auf. Im Übrigen ist die Einlasskammer des Sperrlabyrinths 10 unmittelbar an die Gasdichtung 21 angrenzend angeordnet. Dabei ist die Gasdichtung 21 und das Sperrlabyrinth 10 so ausgelegt, dass die Gasdichtung 21 eine im Vergleich zum Sperrlabyrinth 10 vernachlässigbar kleine Gasleckage aufweist. Die Einlasskammer ist also auf ihrer vom Prozessgasraum 3 abgewandten Seite durch die Gasdichtung 21 begrenzt, wobei die Gasdichtung 21 eine um ein Vielfaches kleinere Gasleckage als das Dreikammersperrlabyrinth 10 hat. Durch diese Art der Anordnung eines Sperrlabyrinths 10 und einer Gasdichtung 21 im Rahmen eines Dichtungssystems 20 der FIG 2 ist der Sperrgasstrom 11C in seinem weiteren Verlauf und insbesondere betreffend seine Durchsatzmenge im Wesentlichen durch den Gasdurchlass 7C bestimmt. D.h. die über den Gasstrom 11C eingespeiste Menge an Sperrgas wird zu nahezu 100% durch das Sperrlabyrinth 10 strömen. Dies ermöglicht es, mittels einer am nicht näher dargestellten Eingang der Einlasskammer angeordneten Blende 13 mit konstantem Vordruck eine solche Menge an Sperrgas über den Sperrgasstrom 11C in die Einlasskammer einzuspeisen, dass im Gasdurchlass 7C ein Sperrgasleckagestrom eine solche vorbestimmte Geschwindigkeit aufweist, die zur sicheren Sperrung des Gasdurchlasses 7C gegen Prozessgas ausreicht. Auf diese Weise ist verhindert, dass Prozessgas an die Gasdichtung 21 gelangt.

Damit das Sperrgas nicht in den Prozessraum gelangt, ist vor der dritten Kammer 3C in Form einer Einlasskammer die zweite Kammer 3B und die Kammer 3A angeordnet. Über die Kammer 3A wird Prozessgas in Form eines Prozessgasstroms 11A durch den Gasdurchlass 7B in Form eines Prozessgasleckagestroms 9B der Kammer 3B zugeführt. Der Gasdurchlass 7B ist aufgrund der Prozessgassperrströmung 9b gegen Sperrgas gesperrt. Ein Sperrgas-Prozessgasgemisch 11b wird über die Kammer 3B und ein am Ausgang 5B der Kammer 3B nicht näher dargestelltes Mengenstellglied in Form einer Blende zur Entsorgung abgeleitet. Die Entsorgung kann in Form einer Fackel, einer Chlorvernichtung oder einer sonstigen Reinigung, wie z.B. einem Wasserbad oder einer Filtervorrichtung gebildet sein.

Das im Rahmen der besonders bevorzugten Ausführungsform eines Sperrlabyrinths 10 verwirklichte Konzept führt dazu, dass sich zwischen der Einlasskammer 3C und der zweiten Kammer 3B ein im Vergleich zum Stand der Technik um Vielfaches geringerer Differenzdruck Δp, vorliegend im Bereich zwischen 10 bis 50 mbar einstellt. Dieser stellt sich lediglich über eine nicht näher dargestellte Mengenregeleinrichtung 13 bei der Einlasskammer 3C und der zweiten Kammer 3B ein. Neben der Mengenregeleinrichtung 13 ist dabei unter anderem maßgeblich, dass die dritte Kammer 3C in Form der Einlasskammer des Sperrlabyrinths 10 unmittelbar an die Gasdichtung 21 angrenzend angeordnet ist und die Gasdichtung 21 und das Sperrlabyrinth 10 derart ausgelegt sind, dass die Gasdichtung 21 eine im Vergleich zum Sperrlabyrinth vernachlässigbar kleine Gasleckage aufweist.

Damit auch der Prozessgasverlust minimiert wird, ist die erste Kammer 3A vom eigentlichen Prozessgasraum 13 getrennt. Der Prozessgasraum 3 kann vorliegend in Form des eigentlichen Verdichterraums auf einer Saug- oder Druckseite eines Verdichters gebildet sein. In der ersten Kammer 3A liegt ein Druck über dem Saugdruck im Prozessgasraum 3. Der Druck in der Kammer 3A kann z.B. konstant über dem Saugdruck des Prozessgasraums geregelt sein. Unabhängig davon stellt bei dieser Ausführungsform das zwischen Prozessgasraum 3 und der ersten Kammer 3A strömende Prozessgas nur eine intern kreisende Gasmenge in Form des Prozessgasstroms 11A dar, die weder von außen zugeführt werden muss, noch verloren gehen kann. Ein Mengenstellglied 13 in Form einer Blende am nicht näher dargestellten Auslass 5B der zweiten Kammer 3B ist so ausgelegt, dass die zweite Kammer 3B bei gegebenem Druck der ersten Kammer 3A neben der über den Sperrgasleckagestrom 9C durch den Gasdurchlass 7C zugeführten Sperrgasmenge aus der dritte Kammer 3C lediglich eine vorbestimmte Menge an Prozessgas durchlässt. Auf diese Weise ist auch zwischen der ersten Kammer 3A und der in Form einer Auslasskammer gebildeten zweiten Kammer 3B ein im Vergleich zum Stand der Technik extrem kleiner Differenzdruck Δp gebildet, der vorliegend lediglich im Bereich zwischen 10 bis 50 mbar liegt. Darüber hinaus ist auch sichergestellt, dass einerseits ein Prozessgasleckagestrom 9B im Gasdurchlass 7B zur Sperrung der Kammer 3A gegen Sperrgas ausreicht, um zu verhindern dass Sperrgas in die Kammer 3A oder den Prozessgasraum 3 und damit in den Prozessgasstrom 11A gelangt.

Typische Geschwindigkeiten der Sperr- und Prozessgasströme 11A, 11B, 11C zur Sperrung des in FIG 2, FIG 3, und FIG 4 gezeigten Gasdichtungssystems 20, 30, 40, die über Mengenstellglieder 13 betrieben werden, liegen bei etwa 5 - 10 m/s. Die Gasdichtungsleckageströme 9A, 9B, 9C liegen in einem Bereich unterhalb von 10% dieser Sperr- und Prozessgasströme 11A, 11B, 11C. Gasdichtungsleckagen bei mit Differenzdruckregelung arbeitenden Sperrlabyrinthen wie dem in FIG 1 liegen weit darüber. Bei bisherigen Differenzdruckregelungen liegen die Geschwindigkeiten von Sperrgasströmen oder Prozessgasströmen ebenfalls weit über denen der bevorzugten Ausführungsformen, nämlich bei Geschwindigkeiten von 50 - 80 m/s oder mehr.

Die in FIG 2 dargestellte Gasdichtung ist in Form einer Doppeldichtung 21 ausgeführt, die im Wesentlichen aus zwei auf einer Steghülse 23C und der Welle 1 aufsitzenden, spiegelbildlich zueinander angeordneten Ringelementen 23A, 23B gebildet ist. Die Räume zwischen den Ringelementen 23A, 23B werden durch ein Belüftungssystem 25 unter Zuleitung von Belüftungsströmen 27 einem nicht dargestellten Vent belüftet.

Das Gasdichtungssystem 30 der FIG 3 ist durch das bereits im Zusammenhang mit FIG 2 erläuterte Dreikammersperrlabyrinth 10 und eine Tandemgasddichtung 31 gebildet. Die Tandemgasdichtung 31 ist dabei im Wesentlichen durch zwei in gleicher Orientierung auf einer Steghülse 33C aufsitzende Ringelementen 33A, 33B gebildet. Das Belüftungssystem 35 zwischen den Ringelementen 33A, 33B wird im Wesentlichen durch eine Belüftungsströmung 37 mit Zugang zu einem nicht dargestellten Vent entlüftet.

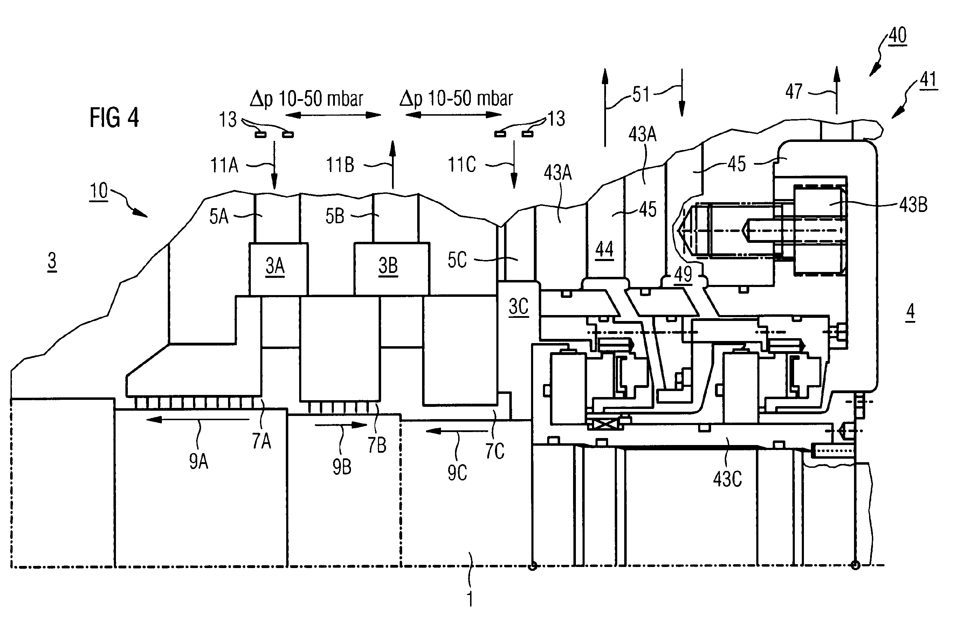

Die in FIG 4 dargestellte besonders bevorzugte Ausführungsform eines Dichtungssystems 40 ist durch die Kombination eines Dreikammersperrlabyrinths 10 wie es bereits im Zusammenhang mit FIG 2 erläutert wurde und einer Tandemgasdichtung mit internem Labyrinth 41 gebildet, wobei die Tandemgasdichtung 41 zur Bildung eines Belüftungssystems 45 ein internes Labyrinth aufweist. Im Übrigen ist die Tandemgasdichtung 41 ähnlich wie in FIG 3 durch die Anordnung von auf einer Steghülse 43C in gleicher Richtung orientierten Ringelementen 43A, 43B gebildet. Die Zwischenräume zwischen den beiden Ringelementen 43A, 43B sind Teil des Belüftungssystems 45 und werden über eine Belüftungsströmung 47 über ein Vent entlüftet.

Mit den in FIG 2, FIG 3 und FIG 4 gezeigten besonders bevorzugten Ausführungsformen eines Gasdichtungssystems 20, 30, 40 unter Verwendung eines Sperrlabyrinths 10 gemäß dem neuen Konzept ist es also möglich, die Vorteile einer Gasdichtung - nämlich kleine Leckage und sichere Abdichtung - auch bei Prozessgasen zu nutzen, die für eine Gasdichtung nicht geeignet sind, auch dann, wenn kein Sperrgas in den Prozess gelangen soll. Die Regelung der Menge an Sperrgas und ggf. auch an Prozessgas über Blenden 13 und Vordruck, insbesondere bei einer Einlasskammer 3C und einer Auslasskammer 3B, hat den Vorteil, dass die Durchsatzmenge gegenüber einer Differenzdruckregelung des Standes der Technik deutlich kleiner ist, da die dabei entstehenden Differenzdrücke deutlich unterhalb von denen liegen, die mit einer Differenzdruckregelung im unteren Grenzbereich sicher zu regeln wären.

Zusammenfassend wurde ein Konzept für Gasdichtungen (21, 31, 41) vorgestellt. Gasdichtungen sind berührungslose Dichtungen zur Abdichtung eines Prozessgasraumes (3) gegen einen Dichtraum (4), wobei eine Gasleckage in der Regel extrem klein ist. Zum Teil dürfen Prozessgase nicht an die Gasdichtung (21, 31, 41) gelangen, da sie diese beschädigen würden. Dies kann durch ein Sperrlabyrinth (10) mit wenigstens einer Kammer (3A, 3B, 3C) zur Beaufschlagung mit einem Gas und zur Anordnung vor einer Gasdichtung (10) verhindert werden. Problematisch ist dabei die zunehmende Leckage an Prozessgas und/oder Sperrgas, die insbesondere mit steigenden Drücken ansteigt. Zur Behebung dieses Problems weist erfindungsgemäß eine Kammer (3A, 3B, 3C) ein Mengenstellglied (13) auf, das für einen Betrieb bei konstantem Vordruck und zur Beaufschlagung einer Kammer (3A, 3B, 3C) mit einer Gasströmung (11A, 11B, 11C) bei einer vorbestimmten Durchsatzmenge ausgelegt ist. In Abkehr von einer üblichen Differenzdruckregelung wird auf diese Weise im Sperrlabyrinth (10) bei einem extrem kleinen Differenzdruck (Δp) eine vorbestimmte Strömungsgeschwindigkeit eingestellt, die zur sicheren Sperrung ausreicht. Auf diese Weise wird eine um ein Vielfaches kleinere Gasleckage im Vergleich zu üblichen Sperrlabyrinthen erreicht. Bei einem Gasdichtungssystem (20, 30, 40) ist dazu erfindungsgemäß vorgesehen, dass das Sperrlabyrinth (10) unmittelbar an die Gasdichtung (21, 31, 41) angrenzend angeordnet ist und die Gasdichtung (21, 31, 41) und das Sperrlabyrinth (10) derart ausgelegt sind, dass die Gasdichtung (21, 31, 41) eine im Vergleich zum Sperrlabyrinth (10) vernachlässigbar kleine Gasleckage aufweist.

## Patentansprüche

1. Dichtungsanordnung zur Abdichtung eines Spaltes zwischen einem Rotor und einem Gehäuse, in welchem sich Prozessgas befindet,
mit einer Gasdichtung (21, 31, 41) und einem an das mit Prozessgas gefüllte Innere des Gehäuses angrenzenden Sperrlabyrinth (10) zur Beaufschlagung mit einem Gas, welches Sperrlabyrinth (10) prozessgasseitig vor der Gasdichtung (21, 31, 41) angeordnet ist, welches Sperrlabyrinth (10) wenigstens eine Kammer (3A, 3B, 3C) aufweist, und wobei
ein Einlass für das beaufschlagende Gas in die wenigstens eine Kammer (3A, 3B, 3C) ein Mengenstellglied (13) aufweist, das für einen Betrieb bei konstantem Vordruck und zur Beaufschlagung einer Kammer (3A, 3B, 3C) mit einer Gasströmung (11A, 11B, 11C), bei einer vorbestimmten Durchsatzmenge ausgelegt ist.

2. Dichtungsanordnung nach Anspruch 1
**gekennzeichnet durch**
wenigstens zwei kommunizierende Kammern (3A, 3B, 3C), wobei eine erste der wenigstens zwei Kammern einen Einlass (5A, 5C) und eine zweite der wenigstens zwei Kammern einen Auslass (5B) aufweist und die wenigstens zwei kommunizierenden Kammern (3A, 3B, 3C) über wenigstens einen Gasdurchlass (7A, 7B, 7C) verbunden sind, wobei der Einlass (5A, 5C) und/oder der Auslass (5B) ein Mengenstellglied (13) aufweist, das für einen Betrieb bei konstantem Vordruck und zur Beaufschlagung einer Kammer (3A, 3B, 3C) mit einer Gasströmung (11A, 11B, 11C) bei einer vorbestimmten Durchsatzmenge ausgelegt ist.

3. Dichtungsanordnung nach Anspruch 1 oder 2
**dadurch gekennzeichnet, dass**
eine Kammer (3A, 3B, 3C) differenzdruckreglerfrei ist.

4. Dichtungsanordnung nach einem der Ansprüche 1 bis 3
**dadurch gekennzeichnet, dass**
eine Gasdichtung (21, 31, 41) seitige Kammer (3C) bis auf einen oder mehrere Gasdurchlässe (7C) nur zu einem weiteren Raum oder einer weiteren Kammer (3B) auslassfrei ist.

5. Dichtungsanordnung nach einem der Ansprüche 1 bis 4
**dadurch gekennzeichnet, dass**
ein Differenzdruck (Δp) zwischen einer Kammer (3A) und einem weiteren Raum (3) und/oder zwischen zwei kommunizierenden Kammern (3A, 3B, 3C) bei Betrieb unterhalb von 100mbar, insbesondere unterhalb von 50mbar, liegt.

6. Dichtungsanordnung nach einem der Ansprüche 1 bis 5
**dadurch gekennzeichnet, dass**
das Mengenstellglied (13) in Form einer Blende gebildet ist.

7. Dichtungsanordnung nach einem der Ansprüche 1 bis 6
**dadurch gekennzeichnet, dass**
das Mengenstellglied (13) regelbar ist.

8. Dichtungsanordnung nach einem der Ansprüche 1 bis 7 **gekennzeichnet durch**
genau drei kommunizierende Kammern (3A, 3B, 3C), wobei eine erste (3A) und dritte (3C) der drei Kammern (3A, 3B, 3C) einen Einlass (5A, 5C) und eine zweite (5B) der drei Kammern (3A, 3B, 3C) einen Auslass (5B) aufweist und die drei kommunizierenden Kammern (3A, 3B, 3C) über wenigstens einen Gasdurchlass (7A, 7B, 7C) verbunden sind.

9. Dichtungsanordnung nach Anspruch 8
**dadurch gekennzeichnet, dass**
die zweite Kammer (3B) zwischen der ersten (3A) und der dritten Kammer (3C) angeordnet ist und ein erster Gasdurchlass (7B) zwischen der ersten (3A) und zweiten Kammer (3B) und ein zweiter Gasdurchlass (7C) zwischen der dritten (3C) und zweiten (3B) Kammer gebildet ist, wobei der erste (7B) und der zweite (7C) Gasdurchlass für gegenläufige Gasströmungen (9B, 9C) ausgelegt sind.

10. Dichtungsanordnung nach Anspruch 8 oder 9
**dadurch gekennzeichnet, dass**
die erste Kammer (3A) zur Beaufschlagung mit einem Prozessgas (11A) ausgelegt ist und die dritte Kammer (3C) zur Beaufschlagung mit einem Sperrgas (11C) ausgelegt ist.

11. Dichtungsanordnung nach einem der vorhergehenden Ansprüche,
**dadurch gekennzeichnet, dass**
- eine Einlasskammer (3C) des Sperrlabyrinths (10) unmittelbar an die Gasdichtung (21, 31, 41) angrenzend angeordnet ist, und
- die Gasdichtung (21, 31, 41) und das Sperrlabyrinth (10) derart ausgelegt sind, dass die Gasdichtung (21, 31, 41) eine im Vergleich zum Sperrlabyrinth (10) kleine Gasleckage aufweist derart, dass
die Gasleckage der Gasdichtung (21, 31, 41) um wenigstens eine Zehnerpotenz niedriger als die Gasleckage des Sperrlabyrinths (10) ist.

12. Verdichter mit einer Dichtungsanordnung nach einem der vorhergehenden Ansprüche.

13. Verfahren zur Abdichtung eines Prozessgasraumes (3) gegen einen Dichtraum (4), mit einem Gasdichtungssystem aufweisend eine Gasdichtung (21, 31, 41) und ein an das mit Prozessgas gefüllte Innere des Gehäuses angrenzendes und prozessgasseitig vor der Gasdichtung (21, 31, 41) angeordnetes Sperrlabyrinth (10) mit wenigstens einer Kammer (3A, 3B, 3C), wobei
- eine unmittelbar an die Gasdichtung (21, 31, 41) angrenzend angeordnete Einlasskammer (3C) des Sperrlabyrinths (10) mit Gas (11C) beaufschlagt wird;
- eine Gasleckage der Gasdichtung (21, 31, 41) im Vergleich zu einer Gasleckage des Sperrlabyrinths (10) klein gehalten wird, derart, dass die Gasleckage der Gasdichtung (21, 31, 41) um wenigstens eine Zehnerpotenz niedriger als die Gasleckage des Sperrlabyrinths (10) ist; und
- eine Kammer (3A, 3B, 3C) mit einem konstanten Vordruck und mit einer Gasströmung bei einer vorbestimmten Durchsatzmenge beaufschlagt wird, wobei die Gasströmung (11A, 11B, 11C) mengengeregelt wird.

## Claims

1. Sealing arrangement for sealing off a gap between a rotor and a housing in which process gas is located,
with a gas seal (21, 31, 41) and with a locking labyrinth (10) which is directly adjacent to the housing interior filled with process gas, to be acted upon with a gas, which locking labyrinth (10) is arranged upstream of the gas seal (21, 31, 41) on the process gas side, which locking labyrinth (10) has at least one chamber (3A, 3B, 3C), and an inlet for the acting gas into the at least one chamber (3A, 3B, 3C) having a quantity control element (13) which is designed for operation at a constant admission pressure and for acting upon a chamber (3A, 3B, 3C) with a gas flow (11A, 11B, 11C) at a predetermined throughput rate.

2. Sealing arrangement according to Claim 1, **characterized by** at least two communicating chambers (3A, 3B, 3C), the first of the at least two chambers having an inlet (5A, 5C) and the second of the at least two chambers having an outlet (5B) and the at least two communicating chambers (3A, 3B, 3C) being connected by an at least one gas passage (7A, 7B, 7C), the inlet (5A, 5C) and/or the outlet (5B) having a quantity control element (13) which is designed for operation at a constant admission pressure and for acting upon a chamber (3A, 3B, 3C) with a gas flow (11A, 11B, 11C) at a predetermined throughput rate.

3. Sealing arrangement according to Claim 1 or 2, **characterized in that** the chamber (3A, 3B, 3C) is free of a differential pressure regulator.

4. Sealing arrangement according to one of Claims 1 to 3, **characterized in that** a gas seal (21, 31, 41) side chamber (3C) is outlet-free with the exception of one or more gas passages (7C) only to a further space or a further chamber (3B).

5. Sealing arrangement according to one of Claims 1 to 4, **characterized in that** a differential pressure (Δp) between the chamber (3A) and a further space (3) and/or between two communicating chambers (3A, 3B, 3C) during operation lies below 100 mbar, particularly below 50 mbar.

6. Sealing arrangement according to one of Claims 1 to 5, **characterized in that** the quantity control element (13) is in the form of a diaphragm.

7. Sealing arrangement according to one of Claims 1 to 6, **characterized in that** the quantity control element (13) is regulatable.

8. Sealing arrangement according to one of Claims 1 to 7, **characterized by** exactly three communicating chambers (3A, 3B, 3C), a first (3A) and a third (3C) of the three chambers (3A, 3B, 3C) having an inlet (5A, 5C) and a second (5B) of the three chambers (3A, 3B, 3C) having an outlet (5B) and the three communicating chambers (3A, 3B, 3C) being connected via at least one gas passage (7A, 7B, 7C).

9. Sealing arrangement according to Claim 8, **characterized in that** the second chamber (3B) is arranged between the first (3A) and the third (3C) chamber, and a first gas passage (7B) is formed between the first (3A) and the second (3B) chamber and a second gas passage (7C) between the third (3C) and the second (3B) chamber, the first (7B) and the second (7C) gas passage being designed for opposite gas flows (9B, 9C).

10. Sealing arrangement according to Claim 8 or 9, **characterized in that** the first chamber (3A) is designed to be acted upon with a process gas (11A) and the third chamber (3C) is designed to be acted upon with a locking gas (11C).

11. Sealing arrangement according to one of the preceding claims, **characterized in that**
- an inlet chamber (3C) of the locking labyrinth (10) is arranged directly adjacently to the gas seal (21, 31, 41), and
- the gas seal (21, 31, 41) and the locking labyrinth (10) are designed in such a way that the gas seal (21, 31, 41) has a low gas leakage, as compared with the locking labyrinth (10), in such a way that the gas leakage of the gas seal (21, 31, 41) is lower by at least a power of ten than the gas leakage of the locking labyrinth (10).

12. Compressor with a sealing arrangement according to one of the preceding claims.

13. Method for sealing off a process gas space (3) with respect to a leaktight space (4), with a gas sealing system having a gas seal (21, 31, 41) and a locking labyrinth (10) which is directly adjacent to the housing interior filled with process gas and arranged upstream of the gas seal (21, 31, 41) on the process gas side and having at least one chamber (3A, 3B, 3C),
- an inlet chamber (3C), being arranged directly adjacently to the gas seal (21, 31, 41), of the locking labyrinth (10) is acted upon with gas (11C);
- a gas leakage of the gas seal (21, 31, 41) is kept low, as compared with a gas leakage of the locking labyrinth (10), in such a way that the gas leakage of the gas seal (21, 31, 41) is lower by at least a power of ten than the gas leakage of the locking labyrinth (10); and
- a chamber (3A, 3B, 3C) is acted upon with a constant admission pressure and with a gas flow at a predetermined throughput rate, the gas flow (11A, 11B, 11C) being quantity-regulated.

## Revendications

1. Dispositif d'étanchéité pour rendre étanche un intervalle entre un rotor et un carter, dans lequel se trouve du gaz de processus,
comprenant une étanchéité ( 21, 31, 41 ) au gaz et un labyrinthe ( 10 ) d'arrêt voisin de l'intérieur du carter empli de gaz de processus pour l'alimentation en un gaz, ce labyrinthe ( 10 ) d'arrêt étant disposé du côté du gaz de processus avant l'étanchéité ( 21, 31, 41 ) au gaz, ce labyrinthe ( 10 ) d'arrêt ayant au moins une chambre ( 3A, 3B, 3C ), et dans lequel
une admission du gaz d'alimentation de la au moins une chambre ( 3A, 3B, 3C ) a un élément ( 13 ) de réglage de la quantité, qui est conçu pour un fonctionnement à une pression d'admission constante et pour alimenter une chambre ( 3A, 3B, 3C ) en un courant ( 11A, 11B, 11C ) gazeux à un débit déterminé à l'avance.

2. Dispositif d'étanchéité suivant la revendication 1,
**caractérisé par**
au moins deux chambres ( 3A, 3B, 3C ) communicantes, une première des au moins deux chambres ayant une admission ( 5A, 5C ) et une deuxième des au moins deux chambres ayant une sortie ( 5B ) et les au moins deux chambres ( 3A, 3B, 3C ) communicantes communiquant par au moins un passage ( 7A, 7B, 7C ) pour du gaz, dans lequel l'admission ( 5A, 5C ) et/ou la sortie ( 5B ) a un élément ( 13 ) de réglage de la quantité, qui est conçu pour un fonctionnement à une pression d'admission constante et pour alimenter une chambre ( 3A, 3B, 3C ) en un courant ( 11A, 11B, 11C ) gazeux à un débit déterminé à l'avance.

3. Dispositif d'étanchéité suivant la revendication 1 ou 2,
**caractérisé en ce que**
une chambre ( 3A, 3B, 3C ) n'a pas de dispositif de réglage de la différence de pression.

4. Dispositif d'étanchéité suivant l'une des revendications 1 à 3,
**caractérisé en ce que**
une chambre ( 3C ) côté étanchéité ( 21, 31, 41 ) au gaz est, à l'exception d'un ou de plusieurs passages ( 7C ) pour du gaz seulement vers un autre espace ou une autre chambre ( 3B ), sans sortie.

5. Dispositif d'étanchéité suivant l'une des revendications 1 à 4,
**caractérisé en ce que**
une différence ( Δp ) de pression entre une chambre ( 3 ) et un autre espace ( 3 ) et/ou entre deux chambres ( 3A, 3B, 3C ) communicantes est lors du fonctionnement, inférieure à 100 mbar, notamment inférieure à 50 mbar.

6. Dispositif d'étanchéité suivant l'une des revendications 1 à 5,
**caractérisé en ce que**
l'élément ( 13 ) de réglage de la quantité est sous la forme d'un obturateur.

7. Dispositif d'étanchéité suivant l'une des revendications 1 à 6,
**caractérisé en ce que**
l'élément ( 13 ) de réglage d'une quantité est réglable.

8. Dispositif d'étanchéité suivant l'une des revendications 1 à 7,
**caractérisé par**
exactement trois chambres ( 3A, 3B, 3C ) communicantes, une première ( 3A ) et une troisième ( 3C ) des trois chambres ( 3A, 3B, 3C ) ayant une admission ( 5A, 5C ) et une deuxième ( 3B ) des trois chambres ( 3A, 3B, 3C ) ayant une sortie ( 5B ) et les trois chambres ( 3A 3B, 3C ) communicantes communiquant par au moins un passage ( 7A, 7B, 7C ) pour du gaz.

9. Dispositif d'étanchéité suivant la revendication 8,
**caractérisé en ce que**
la deuxième chambre ( 3B ) est disposée entre la première chambre ( 3A ) et la troisième chambre ( 3C ) et un premier passage ( 7B ) pour du gaz est formé entre la première chambre ( 3A ) et la deuxième chambre ( 3B ) et un deuxième passage ( 7C ) pour du gaz est formé entre la troisième chambre ( 3C ) et une deuxième chambre ( 3B ), le premier passage ( 7B ) pour du gaz et le deuxième passage ( 7C ) pour du gaz étant conçus pour des courants gazeux ( 9B, 9C ) en sens opposé.

10. Dispositif d'étanchéité suivant la revendication 8 ou 9,
**caractérisé en ce que**
la première chambre ( 3A ) est conçue pour l'alimentation en un gaz ( 11A ) de processus et la troisième chambre ( 3C ) est conçue pour l'alimentation en un gaz ( 11C ) d'arrêt.

11. Dispositif d'étanchéité suivant l'une des revendications précédentes,
**caractérisé en ce que**
- une chambre ( 3C ) d'admission du labyrinthe ( 10 ) d'arrêt est disposée directement au voisinage de l'étanchéité ( 21, 31, 41 ) au gaz, et
- l'étanchéité ( 21, 31, 41 ) au gaz et le labyrinthe ( 10 ) d'arrêt sont conçus de façon à ce que l'étanchéité ( 21, 31, 41 ) au gaz ait une fuite de gaz petite par rapport au labyrinthe ( 10 ) d'arrêt,
de sorte que la fuite de gaz de l'étanchéité ( 21, 31, 41 ) au gaz est plus petite d'au moins une puissance de dix que la fuite de gaz du labyrinthe ( 10 ) d'arrêt.

12. Compresseur ayant un dispositif d'étanchéité suivant l'une des revendications précédentes.

13. procédé pour rendre étanche un espace ( 3 ) de gaz de processus vis-à-vis d'un espace ( 4 ) d'étanchéité, comprenant un système d'étanchéité au gaz ayant une étanchéité ( 21, 31, 41 ) au gaz voisine de l'intérieur du carter empli de gaz de processus et un labyrinthe ( 10 ) d'arrêt disposé côté gaz du processus avant l'étanchéité ( 21, 31, 41 ) au gaz et ayant au moins une chambre ( 3A, 3B, 3C ), dans lequel
- on alimente en gaz ( 11C ) une chambre ( 3C ) d'admission du labyrinthe ( 10 ) d'arrêt disposée au voisinage immédiat de l'étanchéité ( 21, 31, 41 ) au gaz ;
- on maintient une fuite de gaz de l'étanchéité ( 21, 31, 41 ) au gaz petite par rapport à une fuite de gaz du labyrinthe ( 10 ) d'arrêt, de façon à ce que la fuite de gaz de l'étanchéité ( 21, 31, 41 ) au gaz soit plus petite d'au moins une puissance de dix que la fuite de gaz du labyrinthe ( 10 ) d'arrêt ; et
- on alimente une chambre ( 3A, 3B, 3C ) à une pression d'alimentation constante et en un courant gazeux ayant un débit déterminé à l'avance, le courant ( 11A, 11B, 11C ) gazeux étant réglé en quantité.
